# EUROPÄISCHE PATENTANMELDUNG

(11) **EP 1 508 851 A1**
(43) Veröffentlichungstag der Anmeldung: **23.02.2005**
(21) Anmeldenummer: 03018578.9
(22) Anmeldetag: 18.08.2003
(51) Int. Cl.: G06F 3/14

(54) **Adhoc-Bildschirmassemblierung mit virtuellen Netz**

(71) Anmelder: SIEMENS AKTIENGESELLSCHAFT, 80333 München (DE)
(72) Erfinder: Bitterlich, Jean-Yves, 81549 München (DE)

(57) **Zusammenfassung**

Die Erfindung betrifft ein Verfahren für eine Adhoc Bildschirmassemblierung von einem Steuercomputer (SC) über ein Netz (NL) hinweg mit einem Computer (UC1, UC2) zur Kopplung ihrer Eingabe- und / oder Ausgabemittel, bei dem im Steuercomputer (SC) darzustellende Objekte über einen Bildschirmtreiber-Client (DD-C) an das Netz (NL) gegeben werden, wobei der Bildschirmtreiber-Client (DD-C) zu einer Objektbibliothek (WSL) hin als ein Bildschirmtreiber (SSD) wirkt, bei dem die Objekte vom Netz (NL) über einen Virtuellen Bildschirmtreiber im Netz (NVDD), der im Computer (UC1, UC2) realisiert ist, auf einer Anzeigeeinrichtung (SCR) ausgegeben werden, wobei der Virtuelle Bildschirmtreiber im Netz (NVDD) zu einem Bildschirmtreiber (SDD) hin als Objektbibliothek (WSL) wirkt.

## Beschreibung

Die Erfindung betrifft ein Verfahren für eine Adhoc Bildschirmassemblierung von einem Steuercomputer über ein Netz hinweg mit einem Computer zur Kopplung ihrer Eingabe- und /oder Ausgabemittel.

Es gibt vielfältige Gründe für die Verwendung einer spontanen Bildschirmassemblierung oder einer spontanen Zusammensetzung beziehungsweise Zusammenfügung von Anzeigeeinrichtungen (adhoc collaboration display). Unter einer Bildschirmassemblierung soll beispielsweise das Zusammenfügen mehrerer Bildschirme zu einem sogenannten Grossbildschirm verstanden werden. Weiter soll auch allgemein die Verknüpfung von Anzeigen, als stand-alone-Gerät oder integriert in einer DV-Anlage verstanden werden.

Die folgenden Ausführungen konzentrieren sich auf die grafische Ansteuerung von Displays beziehungsweise Anzeigen, wobei es sich grundsätzlich um das Zeichnen von Objekten auf einem Display handelt. Die hierzu verwendeten Techniken enthalten neben dieser Ansteuerung von Bildschirmen auch die Ansteuerung von Eingabemitteln, wie beispielsweise Tastaturen, Mäusen und ähnlichem mehr. All diese Mittel für eine Bedienoberfläche zur Interaktion für ein elektronisches Datenverarbeitungsgerät sowie auch für ein stationäres oder mobiles Kommunikationsendgerät sind in beinahe allen Betriebssystemen in der gleichen Verarbeitungsebene (Layer) eingebunden.

Ausgangspunkt ist beispielsweise die Anzeige eines Mobiltelefons oder eines PDAs (Personal Digital Assistant).

So will beispielsweise in einer gemeinschaftlichen Umgebung eine Gruppe von Leuten, eine sogenannte adhoc-Gemeinschaft, gemeinsam ein Dokument anschauen oder auch gemeinsam in diesem Dokument arbeiten. Unter einem Dokument soll hier jede Darstellung einer Datei verstanden werden.

Andere Personen mit beispielsweise Handys wollen ihre Daten auf einer gemeinsamen Groß-Anzeige bearbeiten, wobei sie den Synchronisierungsschritt überspringen.

In einer Wohnung wollen die Bewohner auf einem Zentraldisplay alle Inhalte beziehungsweise Zustände der im Haus befindlichen Geräte betrachten können. Diese Inhalte sind beispielsweise eingehende SMS-Nachrichten an den schnurlosen oder drahtgebundenen Telefonen, die Meldungen einer laufenden Wasch- oder Spülmaschine, die auf dem Bildschirm eines Fernsehgerätes angezeigt werden.

Weiter können Geräte ohne ein eigenes Display über das sozusagen mitgeführte Display eines Handys angesteuert werden.

Zur Ansteuerung von Anzeigeeinrichtung beziehungsweise Displays sind folgende Techniken bekannt.

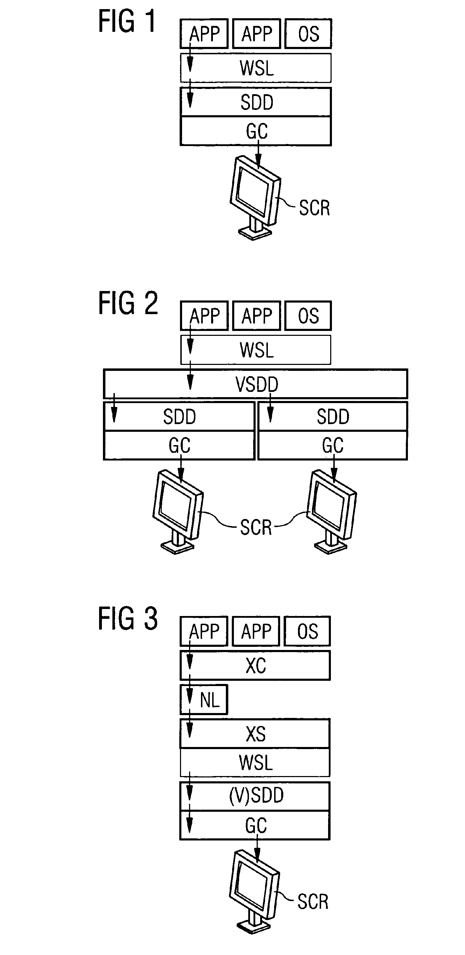

In der Figur 1 ist die übliche Arbeitsweise eines Betriebssystems OS (Operating System) zur Ansteuerung eines Bildschirms SCR (Screen) beziehungsweise Anzeigeeinrichtung beschrieben.

Ein Computer oder PDA hat üblicherweise ein einziges Display. Das Betriebssystem OS greift auf eine Objektbibliothek WSL (WidgetSet Library) zu. Neben dem Betriebssystem OS, sozusagen als Standard-Applikation, bedienen sich im Allgemeinen die im Computer installierten Applikationen APP der Objektbibliothek WSL. Die Objektbibliothek WSL generiert auf Grund der Adressierung durch die Applikationen APP die gewünschten Objekte, das heisst sie zeichnet die Objekte, und gibt diese weiter an den Bildschirmtreiber SDD (Screen Device Driver). Als Objekte beziehungsweise Interaktionsobjekten sollen neben Icons und anderen Symbolen auch Schriftzeichen und sonstige darstellbare Zeichen verstanden werden.

Der Bildschirmtreiber SDD bereitet die Objekte für die Grafikkarte GC (Graphic Card) auf, die dann direkt den Bildschirm SCR ansteuert und darauf die Objekte darstellt.

Eine Veränderung der Bildschirmgrösse ist nicht möglich.

In Figur 2 ist ein modernes Betriebssystem OS dargestellt, wie beispielsweise Win2000, WinXP, Linux-X11R6-Xfree86 und andere mehr. Ein solches Betriebssystem OS kann mehrere Bildschirme SCR ansteuern (bekannt unter Xinerama Feature in Xfree86). Hierzu verwenden die Betriebssysteme OS im Allgemeinen eine virtuelle Schicht, einen sogenannten Virtuellen Bildschirmtreiber VSDD. Dieser Virtuelle Bildschirmtreiber VSDD ist zwischen die Objektbibliothek WSL und den beziehungsweise die Bildschirmtreiber SDD eingefügt. Der Virtuelle Bildschirmtreiber VSDD arbeitet als vorgeschaltetes Verbindungsglied für zwei, wie in der Figur dargestellt, oder mehr Bildschirmtreiber SDD zur gleichzeitigen Ansteuerung von ebenso vielen Displays SCR.

Der Virtuelle Bildschirmtreiber VSDD täuscht vor beziehungsweise simuliert für die Objektbibliothek WSL einen einzigen Bildschirm SCR, der allerdings die doppelte Höhe oder die doppelte Breite eines einzigen dieser Bildschirme SCR aufweist. Höhe oder Breite sind dabei von den Einstellungen des Benutzers abhängig. Dies gilt für mehr als zwei Bildschirme SCR analog.

Der virtuelle Bildschirmtreiber VSDD übernimmt es, die von der Objektbibliothek WSL ausgegebenen Objekte über den zugehörigen Bildschirmtreiber SDD an die entsprechende Grafikkarte SC zu geben, und ermöglicht somit die positionsrichtige Darstellung auf einem der Bildschirme SCR. Die Darstellung ist vollkommen transparent für die Applikation APP und kann frei über die beiden Bildschirmen SCR bewegt und über die beiden Schirme SCR gespannt und gestreckt werden. Die beiden Bildschirme SCR werden durch den virtuellen Bildschirmtreiber VSDD behandelt wie ein einziger, physikalisch vorhandener Bildschirm SCR mit der doppelten Grösse.

Hierbei können nur Einzelbildschirme beziehungsweise Bildschirme SCR zu einem Grossbild zusammengefügt werden, die von ein und derselben Plattform aus angesteuert werden.

In Figur 3 ist eine Variante dargestellt, bei der der Rechner und die Anzeigeeinrichtung SCR sich nicht mehr am gleichen Ort befinden, sondern über eine sogenannte Client-Server-Applikation miteinander in Verbindung stehen. Ein X-Client XC, beispielsweise ein X11R6-Client, ist im lokalen Rechner angeordnet, und empfängt von den Applikationen APP beziehungsweise dem Betriebssystem OS die entsprechenden Datensätze.

Der Rechner, insbesondere der X-Client XC, ist über ein Netzwerk NL (Network Layer) mit einem X-Server XS verbunden. Das Netzwerk NL kann durch ein drahtgebundenes oder drahtloses Kommunikationsnetz oder ein Computer-Verbindungsnetz realisiert sein. Die Datenkommunikation über das Netz NL erfolgt durch ein entsprechend ausgestaltetes Protokoll, auf das hier nicht näher eingegangen werden muss. Diese Konfiguration entspricht weitgehend der in Figur 1 dargestellten Konfiguration, wobei zwischen den Applikationen APP, dem Betriebssystem OS und der nachfolgenden Objektbibliothek WSL die Client-Server-Anwendung, bestehend aus dem X-Client XC, dem Netzwerk NL und dem X-Server XS, angeordnet ist.

Die Objektbibliothek WSL mit dem vorgeschalteten X-Server XS, der Bildschirmtreiber SDD beziehungsweise der Virtuelle Bildschirmtreiber VSDD, und die Grafikkarte SC sowie der Bildschirm SCR sind als ein weiterer Computer beziehungsweise als eine entfernt angeordnete Rechenanlage ausgebildet.

Bei einer Variante hierzu ist der Bildschirmtreiber SDD durch den schon vorstehen anhand von Figur 2 beschriebenen Virtuellen Bildschirmtreiber VSDD ersetzt. Dies ermöglicht die Ansteuerung von mehreren Bildschirmen SCR. (Dieser Fall ist in der Figur nicht näher ausgeführt.)

Diese Variante ist eine Hybridlösung, bei der die lokale Bildschirmsteuerung durch eine über das Netz gesteuerte Bildschirmsteuerung ersetzt wird. Es handelt sich dabei sozusagen um ein Bildschirm-Fernsteuerung.

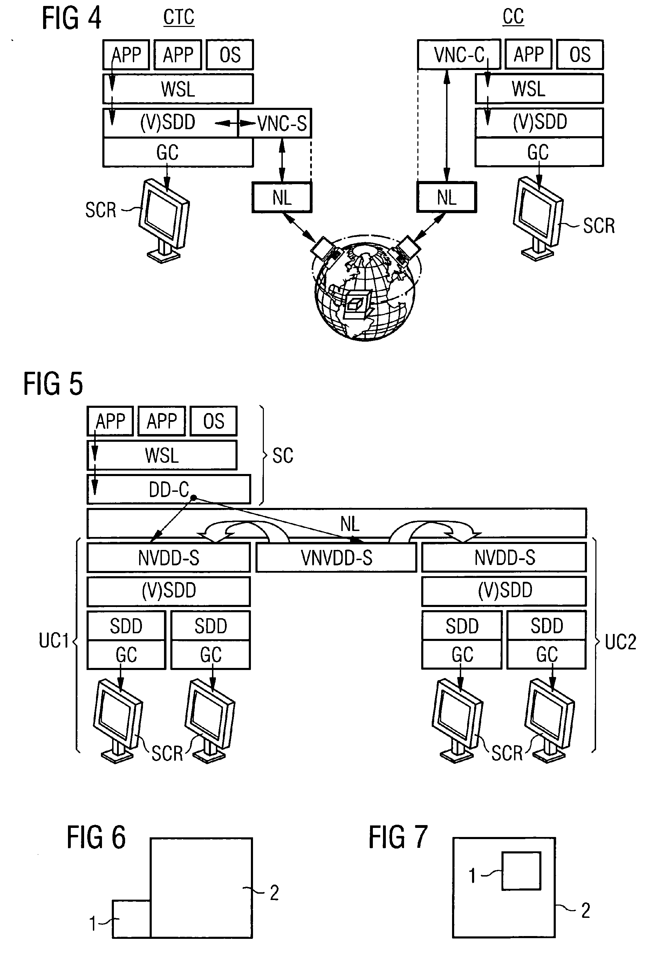

In der Figur 4 ist eine sogenannte Display-Steuerung über das Netz (Display controlled over the network) dargestellt. Hierbei ist auf der einen Seite ein Client Computer CC vorhanden, mit Applikation APP und Betriebssystem OS, Objektbibliothek WSL, Bildschirmtreiber SDD oder Virtuellen Bildschirmtreiber VSDD, Grafikkarte GC und Bildschirm SCR.

Auf der anderen Seite ist ein zu steuernder beziehungsweise fernzusteuernder Computer CTC (Computer to be controlled) angeordnet, der die gleichen Einheiten aufweist.

Die beiden Computer CC und CTC sind über einen sogenannten Virtuellen Netzwerk- Computer VNC (Virtual Network Computer) verbunden. Bei diesem Netzwerk kann es sich prinzipiell um das WWW (World Wide Web) handeln. Der Virtuelle Netzwerk-Computer VNC ist im eigentlichen Sinn ein Protokoll, das Einund Ausgabedaten aufnimmt, diese beispielsweise in eine serielle Form bringt und zu einer Client Anwendung sendet, die irgendwo im Netz läuft.

Für den Datenaustausch beziehungsweise Datentransfer weist der Client Computer CC einen VNC Client VNC-C auf, der über das schon aus der Figur 3 bekannte Netzwerk NL mit einem Daten- oder Kommunikationsnetz in Verbindung steht. Der VNC Client VNC-C ist analog zu einer Applikation APP in den Computer CC eingebunden.

Der zu steuernde Computer CTC verfügt zur Durchführung des Datenverkehrs einen sogenannten VNC Spion VNC-S auf, der ebenfalls mit dem Netzwerk NL in Verbindung steht. Der VNC Spion VNC-S ist im Computer CTC beispielsweise direkt mit dem (Virtuellen) Bildschirmtreiber (V)SDD gekoppelt.

Diese Anordnung ermöglicht der Client Anwendung die vollständigen Kontrolle über den zu steuernden Computer CTC. Der Benutzer arbeitet hierbei an dem Client Computer CC in der gleichen Weise, als wenn er vor dem Bildschirm SCR des zu steuernden Computers CTC säße. Bei Verwendung des Virtuellen Netzwerk-Computers VNC kann der Datenaustausch unterbrochen werden und von einem anderen Ort aus fortgesetzt werden, wobei die Anzeige-Einstellungen, wie Anzahl und Anordnung der Fenster in Windows, die Position des Mauszeigers, u.a.m, erhalten bleiben wie vor der Unterbrechung.

Microsoft verwendet eine hierzu ähnliche Konfiguration unter dem Namen "pcAnywhere".

Der Erfindung liegt die Aufgabe zugrunde, ausgehend von einem Steuercomputer eine Bildschirmassemblierung mit Displays anderer DV-Anlagen zu ermöglichen.

Diese Aufgabe wird erfindungsgemäß durch die im Patentanspruch 1 angegebenen Merkmale gelöst.

Im folgenden wird die Erfindung an Hand eines in der Zeichnung dargestellten Ausführungsbeispieles beschrieben. Dabei zeigen :
- Figur 1: eine bekannte Anordnung zur Ansteuerung eines Bildschirmes mit einem Computer,
- Figur 2: eine bekannte Anordnung zur Ansteuerung eines aus Einzelbildschirmen zusammengesetzten Grossbildschirmes,
- Figur 3: eine bekannte Anordnung zur Fernsteuerung eines Bildschirmes von einem entfernten Computer aus,
- Figur 4: eine bekannte Anordnung zur Fernsteuerung eines Bildschirmes über einen virtuellen Netzwerk-Computer
- Figur 5: eine erfindungsgemäße Anordnung zur adhoc Assemblierung von Bildschirmen,
- Figur 6: ein Szenario für eine Bildschirmzusammensetzung, und
- Figur 7: ein weiteres Szenario für eine Bildschirmzusammensetzung.

In der Figur 5 sind die wesentlichen Komponenten der Erfindung dargestellt. Die Erfindung geht aus von einem Steuercomputer SC (Control Computer) mit Applikationen APP, Betriebssystem OS und einer Objektbibliothek WSL, wie in Figur 1 als Computer beziehungsweise PDA beschrieben.

Erfindungsgemäß weist der Steuercomputer SC einen Bildschirmtreiber-Client DD-C (Device Driver Client) auf. In einer bildhaften Darstellung benutzen die Applikationen APP die Objektbibliothek WSL um grafische Objekte oder Komponenten zu zeichnen. Die Objektbibliothek WSL zeichnet diese Objekte auf den Bildschirmtreiber-Client DD-C.

Der Bildschirmtreiber-Client DD-C gibt im Rahmen der Erfindung die gezeichneten Objekte weiter, entweder an einen Virtuellen Bildschirmtreiber-Service im Netz NVDD-S (Networked Virtual Device Driver Service) oder an einen Virtuellen Bildschirmtreiber-Service im Virtuellen Netz VNVDD-S (Virtual Networked Virtual Device Driver Service). Für die Weitergabe der Objekte werden zwischen Client DD-C und Bildschirmtreiber-Service (V)NVDD-S Protokolle eingesetzt, die im Prinzip die entsprechenden Daten durch die Layer beziehungsweise Schichten der Übertragungsmedien tunneln. Das Übertragungsmedium ist beispielsweise das Netzwerk NL.

Bei der folgenden Erläuterung der Erfindung werden zur Vereinfachung die Komponenten, die der Bildschirmtreiber-Client DD-C benützt, abgekürzt bezeichnet.

In einer ersten Variante der Erfindung benützt der Client DD-C einen Virtuellen Bildschirmtreiber-Service im Netz NVDD-S, der als sogenannter Virtueller Bildschirmtreiber im Netz NVDD arbeitet. Der Virtuelle Bildschirmtreiber im Netz NVDD ist zusammen mit dem Bildschirmtreiber SDD und mindestens einem Bildschirm SCR sowie der zugehörigen Grafikkarte GC Bestandteil von Computern UC1 beziehungsweise UC2 (Used Computer). Bei der Verwendung von zwei Bildschirmen SCR wird der schon bekannte virtuelle Bildschirmtreiber VSDD eingesetzt.

In einer zweiten Variante der Erfindung benützt der Client DD-C einen Virtuellen Bildschirmtreiber-Service im Virtuellen Netz VNVDD-S, der als sogenannter Virtueller Bildschirmtreiber im Virtuellen Netz VNVDD arbeitet. Prinzipiell wirken die Bildschirmtreiber (V)NVDD in einer ähnlichen Weise wie der in Figur 2 beschriebene Virtuelle Bildschirmtreiber VSDD, der zu Objektbibliothek WSL hin einen einzigen Bildschirmtreiber SDD an Stelle der zwei physikalisch vorhandenen Treiber SDD vortäuscht.

Der Unterschied zwischen den beiden Virtuellen Bildschirmtreibern NVDD und VNVDD ist folgender:
- Der Virtuelle Bildschirmtreiber im Netz NVDD kann die Hardware, das heisst die Grafikkarte GC direkt ansteuern. Wenn der Bildschirmtreiber-Client DD-C den Virtuellen Bildschirmtreiber im Netz NVDD verwendet, so tunnelt dieser bedarfsweise über den Virtuellen Bildschirmtreiber VSDD die Information beziehungsweise Objekte zum Treiber SDD. Der Bildschirmtreiber NVDD muss hierbei auf dem Computer UC1 beziehungsweise UC2 laufen, in dem die entsprechende Grafikkarte GC läuft.
- Der Virtuelle Bildschirmtreiber im Virtuellen Netz VNVDD sucht im Netz NL nach irgendeinem erreichbaren Virtuellen Bildschirmtreiber im Netz NVDD oder auch nach irgendeinem weiteren Virtuellen Bildschirmtreiber im Virtuellen Netz VNVDD. Der Treiber VNVDD benützt hierzu sogenannte service discovery Protokolle. Wenn der Bildschirmtreiber-Client DD-C den Virtuellen Bildschirmtreiber im Virtuellen Netz VNVDD verwendet, so übernimmt dieser die Steuerung der assemblierten Anzeige, das heisst des oder der Bildschirme SCR. Der Bildschirmtreiber VNVDD kann irgendwo im Netz NL laufen, sogar auf Computern, die gar keine eigene Grafikkarte aufweisen.

Im Folgenden wird ein Szenario für die erfindungsgemäße adhoc Bildschirmassemblierung beschrieben. Verwendet werden ein PDA (Persönlicher Digitaler Assistent) und ein Personal Computer (PC), die beide beispielsweise über ein WLAN (Wireless LAN) vernetzt sind. Beide Systeme PDA und PC sind für den Betrieb mit einem Virtuellen Bildschirmtreiber im Netz NVDD ausgerüstet, und zusätzlich der PDA für den Betrieb mit dem Virtuellen Bildschirmtreiber im Virtuellen Netz VNVDD.

Der Benutzer des PDA möchte beispielsweise für eine gewisse Zeitspanne einen grösseren Bildschirm zur Verfügung haben, als ihm der PDA bereitstellen kann. Weiter möchte er die Maus des PC als Eingabemittel verwenden.

Der PDA wird gestartet und nach dem Aufruf einer entsprechenden Applikation versucht die grafische Initialisierungsroutine die Verbindung zu einem Virtuellen Bildschirmtreiber im Virtuellen Netz VNVDD herzustellen. Der Bildschirmtreiber VNVDD sucht im WLAN nach Virtuellen Bildschirmtreibern im Netz NVDD und nach weiteren Virtuellen Bildschirmtreibern im Virtuellen Netz VNVDD. Zumindest zwei Bildschirmtreiber NVDD, den PDA und den PC, wird er finden.

Nach einem entsprechenden Protokollaustausch wird der Bildschirmtreiber VNVDD auf dem PDA entweder eine Konfiguration für die beiden Bildschirme von PDA und PC vorschlagen, oder er wird eine Einstellung gemäss den Voreinstellungen des Benutzers vornehmen. In beiden Fällen wird beispielsweise vom Benutzer eine Zustimmung abgefragt. Danach wird beispielsweise die beispielsweise die in Figur 6 dargestellte Bildschirmzusammensetzung angenommen. Dabei ergänzt der vergleichsweise kleine Bildschirm 1 des PDA die Anzeige 2 des PC am linken unteren Rand.

Der Bildschirmtreiber VNVDD erkennt die Objektbibliothek WSL des PDA. Die Objektbibliothek WSL beginnt auf dem Bildschirm 1 zu zeichnen. Der Benutzer kann jetzt entscheiden, ob er die Anwendung beziehungsweise die zugehörigen Zeichen , wie Text, Zeichnung und allgemein Grafik nach rechts auf den Bildschirm 2 schieben will. Dabei ist auch ein nur teilweises Verschieben der Darstellung möglich, so dass beispielsweise die eine Hälfte auf der Anzeige 1 erscheint und die andere auf der Anzeige 2. Der Benutzer kann weiter beispielsweise die Maus sowie die Tastatur des PC für die Eingaben, eigentlich am PDA, verwenden.

Da der PDA das Gerät ist, auf dem die vom Benutzer gestartete Applikation läuft, werden alle Eingabe- Ausgabe-Daten alleine vom PDA gesteuert. Zu keinem Zeitpunkt läuft diese Applikation auf dem PC selbst.

Bei einem weiteren (in Figur 7 dargestellten) Szenario wird ein Gerät eingesetzt, welches keinen - eigenen - Bildschirm aufweist. Dieses Gerät sucht beispielsweise periodisch oder ausgelöst von einer Bedienperson per Knopfdruck nach einem Virtuellen Bildschirmtreiber-Service im Netz beziehungsweise nach einem Virtuellen Bildschirmtreiber-Service im Virtuellen Netz über eine oder mehrere Netzwerk-Schnittstellen wie Bluetooth, WLAN oder Serial u.a.m. Sobald ein Virtueller Bildschirmtreiber-Service im Netz gefunden wird beginnt die Hauptapplikation mit dem Zeichnen der Objekte. Der Bildschirmtreiber-Service läuft beispielsweise auf dem Notebook oder dem PDA eines weiteren Netzbenutzers. Das Protokoll ist hierbei das gleiche wie das zuvor verwendete mit dem einen Unterschied, dass der weitere Benutzer das Gerät fernsteuern kann, er kann es beispielsweise ausschalten.

Der zusammengesetzte Bildschirm ist in der Figur 7 dargestellt, wobei sich die sozusagen über das Netz projizierte Anzeige 1 des Gerätes innerhalb der flächenmässig grösseren Anzeige 2 des Notebooks befindet.

### Bezugszeichenliste

- WSL: Objektbibliothek (WidgetSet Library)
- OS: Betriebssystem
- APP: Applikation
- SDD: Bildschirmtreiber (Screen Device Driver)
- GC: Grafikkarte (Graphic Card)
- VSDD: Virtueller Bildschirmtreiber
- SCR: Display
- XC: X-Client
- XS: X-Server
- NL: Netzwerk (Network Layer)
- CC: Client Computer
- CTC: Zu steuernder Computer (Computer to be controlled)
- VNC: Virtueller Netzwerk- Computer (Virtual Network Computer)
- VNC-C: VNC Client
- VNC-S: VNC Spion
- SC: Steuercomputer (Control Computer)
- DD-C: Bildschirmtreiber-Client (Device Driver Client)
- NVDD-S: Virtueller Bildschirmtreiber-Service im Netz (Networked Virtual Device Driver Service)
- VNVDD-S: Virtueller Bildschirmtreiber-Service im Virtuellen Netz (Virtual Networked Virtual Device Driver Service)
- NVDD: Virtueller Bildschirmtreiber im Netz arbeitet
- VNVDD: Virtueller Bildschirmtreiber im Virtuellen Netz
- UC1, UC2: Computer (Used Computer)

## Patentansprüche

1. Verfahren für eine Adhoc Bildschirmassemblierung von einem Steuercomputer (SC) über ein Netz (NL) hinweg mit einem Computer (UC1, UC2) zur Kopplung ihrer Eingabe- und / oder Ausgabemittel,
bei dem im Steuercomputer (SC) darzustellende Objekte über einen Bildschirmtreiber-Client (DD-C) an das Netz (NL) gegeben werden, wobei der Bildschirmtreiber-Client (DD-C) zu einer Objektbibliothek (WSL) hin als ein Bildschirmtreiber (SSD) wirkt, und
bei dem die Objekte vom Netz (NL) über einen Virtuellen Bildschirmtreiber im Netz (NVDD), der im Computer (UC1, UC2) realisiert ist, auf einer Anzeigeeinrichtung (SCR) ausgegeben werden, wobei der Virtuelle Bildschirmtreiber im Netz (NVDD) zu einem Bildschirmtreiber (SDD) hin als Objektbibliothek (WSL) wirkt.

2. Verfahren nach Anspruch 1,
bei dem zwischen dem Netz (NL) und dem Virtuellen Bildschirmtreiber im Netz (NVDD) ein Virtueller Bildschirmtreiber im virtuellen Netz (VNVDD)vorgesehen ist, der zur Ausgabe der Objekte einen Virtuellen Bildschirmtreiber im Netz (NVDD) oder einen weiteren Virtuellen Bildschirmtreiber im virtuellen Netz (VNVDD) sucht.

3. Verfahren nach Anspruch 1 oder 2,
bei dem im Computer (UC1, UC2) ein Virtueller Bildschirmtreiber (VSDD) zur lokalen Zusammenschaltung von mehreren Anzeigeeinrichtungen (SCR) vorgesehen ist.
